# FASCICULE DE BREVET EUROPEEN

(11) **EP 3 906 370 B1**
(45) Date de publication et mention de la délivrance du brevet: **18.09.2024**
(21) Numéro de dépôt: 20709278.4
(22) Date de dépôt: 05.02.2020
(51) Int. Cl.: F16H 1/28, F16H 57/08

(54) **RÉDUCTEUR PLANÉTAIRE COMPORTANT UN SUPPORT SOUPLE PRÉCONTRAINT**
PLANETENUNTERSETZUNGSGETRIEBE MIT VORGESPANNTEM BIEGSAMEM TRÄGER
PLANETARY REDUCING GEARSET COMPRISING A PRESTRESSED FLEXIBLE SUPPORT

(30) Priorité: 14.02.2019 FR 1901496
(43) Date de publication de la demande: 10.11.2021
(73) Titulaire: SAFRAN AIRCRAFT ENGINES, 75015 Paris (FR)
(72) Inventeur: NEGRI, Arnaud, Nicolas, 77550 Moissy-Cramayel (FR); BECOULET, Julien, Fabien, Patrick, 77550 Moissy-Cramayel (FR); CUVILLIER, Romain, Guillaume, 77550 Moissy-Cramayel (FR); PATSOURIS, Emmanuel, Pierre, Dimitri, 77550 Moissy-Cramayel (FR)
(74) Mandataire: Brevalex
(86) Numéro de dépôt international: PCT/FR2020/050193
(87) Numéro de publication internationale: WO 2020/165523

(56) Documents cités:
- JP-A- 2004 116 737
- JP-A- 2009 058 002

## Description

### DOMAINE TECHNIQUE

L'invention concerne un réducteur planétaire à porte satellites souple destiné à équiper notamment une turbomachine telle qu'un turboréacteur.

### ÉTAT DE LA TECHNIQUE ANTÉRIEURE

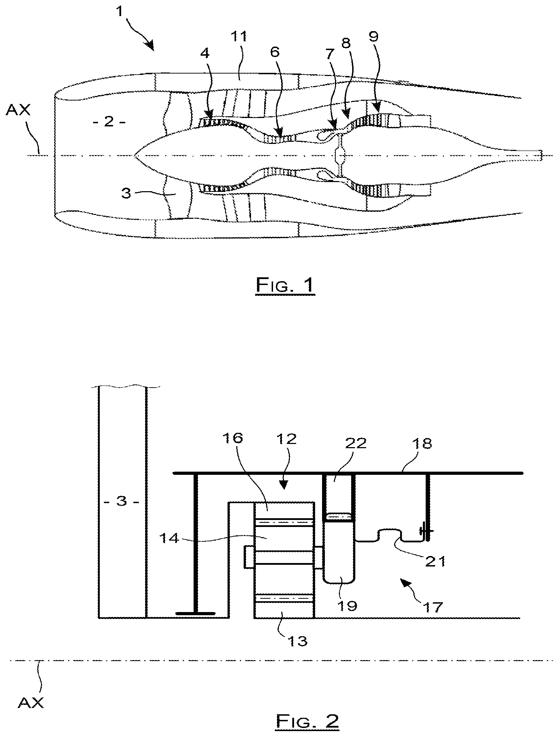

Dans un tel moteur 1 visible en figure 1, l'air est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé dans des étages de compression 4 et 6 avant d'arriver dans une chambre de combustion 7, après quoi il est détendu à travers une turbine haute pression 8 et une turbine basse pression 9 avant d'être évacué vers l'arrière. Le flux secondaire est quant à lui propulsé directement vers l'arrière par la soufflante dans une veine délimitée par le carter 11.

Un tel moteur est généralement de type double-corps : il comporte un rotor dit basse pression par lequel la soufflante 3 est couplée à la turbine basse pression, entouré par un rotor dit haute pression par lequel le compresseur est couplé à la turbine haute pression, ces deux rotors étant indépendants l'un de l'autre en rotation.

Dans certaines architectures, un réducteur est interposé entre le rotor basse pression et la soufflante, pour que la soufflante tourne moins vite que la turbine basse pression qui l'entraîne, ce qui permet d'accroître le rendement.

Le réducteur qui est de type planétaire, est situé au voisinage de la soufflante, comme illustré schématiquement sur la figure 2 où il est repéré par 12. Il comporte un planétaire intérieur 13 solidaire du rotor basse pression, entouré par des pignons satellites 14 eux-mêmes entourés par un planétaire extérieur 16 sous forme d'une couronne à denture interne solidarisée à la soufflante 3. Chaque satellite 14 est engrené avec le planétaire intérieur 13 et avec le planétaire extérieur 16.

Les satellites 14 sont portés par un porte satellites 17 solidarisé à un élément fixe de structure 18 du moteur. Ce porte satellites 17 comporte un corps annulaire 19 portant les pignons satellites 14, et un support 21 de révolution par l'intermédiaire duquel ce corps 19 est fixé à la structure 18.

En fonctionnement, le planétaire intérieur 13 porté par le rotor basse pression entraîne les satellites 14 qui tournent autour d'axes fixes portés par le porte satellites 17, qui entraînent en rotation la soufflante 3 par l'intermédiaire du planétaire extérieur 16 avec lequel ils sont engrenés. La soufflante 3 tourne ainsi en sens inverse du rotor basse pression et à une vitesse plus faible.

Pour des raisons de dynamique d'ensemble, le support 21 est souple selon la direction radiale pour compenser un écart de coaxialité de la soufflante par rapport au rotor basse pression, cette souplesse correspondant en pratique à une flexibilité du support 21 autour des directions radiales par rapport à l'axe AX. Comme visible sur la figure 21, le support 21 a une forme générale de soufflet de révolution, dont les ondulations ont ici des formes de créneaux lorsque vues en coupe.

Le corps 19 est pourvu d'une denture externe engagée dans une denture interne d'une couronne 22 entourant ce corps 19 et qui est rigidement solidaire de la structure 18. L'emboîtement de ces dentures qui constituent une liaison de type crabot ou cannelures est prévu avec un jeu circonférentiel significatif.

En conditions normales de fonctionnement, le couple exercé sur le corps 19 se traduit par une faible torsion du support 21 autour de l'axe AX, de sorte que la denture externe du corps 19 n'est pas en appui circonférentiel sur les dents de la couronne 22, grâce au jeu circonférentiel significatif de ces dentures. Le couple exercé sur le corps 19 est alors intégralement transféré à la structure 18 par le support 21.

Lorsque le couple exercé sur le corps 19 augmente au-delà des conditions normales, la déformation en torsion du support 21 autour de l'axe AX s'accroît, jusqu'à ce que les dents de la denture du corps 19 viennent en appui circonférentiel sur les dents de la couronne 22. Dans ces conditions, une partie du couple est transmise par le support flexible 21 et l'autre par les dentures ce qui évite de solliciter trop fortement ce support flexible.

D'une manière générale, le fait que le support de satellite soit soumis à un couple élevé tout en devant posséder une flexibilité radiale significative fait que son dimensionnement est problématique, et que d'autres types de réducteurs tels que ceux des documents JP2009058002A ou JP2004116737A ne sont pas utilisables.

Le but de l'invention est d'apporter une solution permettant de simplifier la conception d'un tel réducteur.

### EXPOSÉ DE L'INVENTION

A cet effet, l'invention a pour objet un ensemble de réduction comportant un planétaire intérieur mobile et un planétaire extérieur mobile ainsi qu'un porte satellites souple et fixe portant des pignons satellites engrenés avec le planétaire intérieur qu'ils entourent et avec le planétaire extérieur qui les entoure, ce porte satellites étant lié à un carter qui l'entoure par au moins deux liaisons distinctes, avec des moyen de précontrainte en torsion le porte satellites entre ces deux liaisons.

L'invention permet ainsi de diminuer la contrainte maximale de torsion du porte-satellites en fonctionnement, celui-ci étant sollicité en torsion en sens inverse de sa précontrainte lorsqu'il est en service.

L'invention concerne également un ensemble de réduction ainsi défini, dans lequel l'une des deux liaisons du porte satellites avec le carter est une liaison de type crabot, comportant des dents externes portées par le porte satellites et des dents internes portées par le carter, et dans lequel les moyens de précontraintes sont portés par des dents.

L'invention concerne également un ensemble de réduction ainsi défini, dans lequel les moyens de précontrainte sont des ressorts hélicoïdaux, chaque ressort étant porté par une dent en étant orienté circonférentiellement et interposé entre une dent externe et une dent interne qui lui est consécutive.

L'invention concerne également un ensemble de réduction ainsi défini, dans lequel chaque ressort est porté par une dent pourvue d'une face d'appui par laquelle elle vient en appui sur la dent qui lui est consécutive en cas de compression maximale du ressort.

L'invention concerne également un ensemble de réduction ainsi défini, dans lequel chaque ressort entoure un axe dépassant d'une dent, cet axe étant terminé par une face d'appui.

L'invention concerne également un ensemble de réduction ainsi défini, dans lequel chaque ressort est engagé dans un trou formé dans la dent qui le porte.

L'invention concerne également un ensemble de réduction ainsi défini, dans lequel l'autre liaison du porte satellites avec le carter est également une liaison de type crabot. L'invention concerne également un ensemble de réduction ainsi défini, comportant des dents pourvues de plusieurs ressorts.

L'invention concerne également un ensemble de réduction ainsi défini, comportant au moins une dent pourvue de deux ressorts espacés radialement ou longitudinalement à une face de cette dent.

Turbomachine comprenant un ensemble de réduction ainsi défini.

Turboréacteur comprenant un ensemble de réduction ainsi défini.

### BRÈVE DESCRIPTION DES DESSINS

[Fig. 1] est une vue en coupe longitudinale d'un turboréacteur connu ;
[Fig.2] est une représentation schématique en demi-coupe longitudinale d'un réducteur épicycloïdal connu ;
[Fig. 3] est une vue d'ensemble en perspective du réducteur selon l'invention ;
[Fig. 4] est une vue en perspective du réducteur selon l'invention lorsqu'il n'est pas en service ;
[Fig. 5] est une vue en perspective du réducteur selon l'invention en service selon des conditions nominales ;
[Fig. 6] est une vue en perspective du réducteur selon l'invention en service au-delà de conditions nominales ;
[Fig. 7] est une vue en perspective d'une dent équipée d'un axe terminé par une touche de contact dans le réducteur selon l'invention ;
[Fig. 8] est une vue en perspective d'une variante de dent dont la face d'appui forme une touche de contact dans le réducteur selon l'invention ;
[Fig. 9] est une représentation schématique montrant une première variante d'agencement de ressorts dans un réducteur selon l'invention ;
[Fig. 10] est une représentation schématique montrant une seconde variante d'agencement de ressorts dans un réducteur selon l'invention.

### DESCRIPTION DÉTAILLÉE

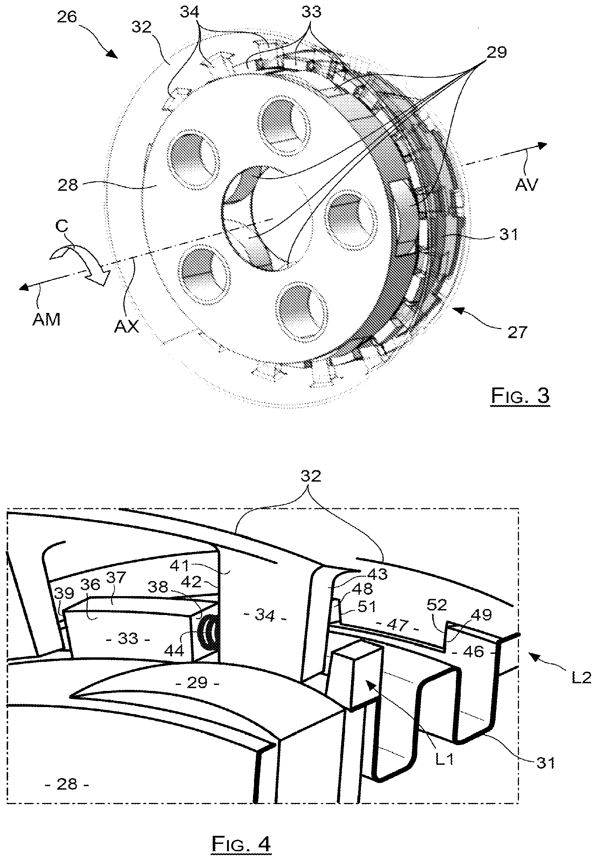

L'ensemble de réduction selon l'invention, repéré par 26 sur la figure 3, comporte un porte satellites 27 comprenant d'une part un corps annulaire 28 portant cinq pignons satellites 29 et d'autre part un support 31 de révolution et par lequel ce corps 28 est solidarisé à un élément fixe de carter 32 du moteur faisant partie de la structure de turbomachine. Le support 31 dépasse d'une face aval du corps, l'amont AM et l'aval AV étant définis par rapport au sens de circulation du flux d'air dans le moteur, le porte satellites 27 pouvant être construit par assemblage du corps 28 avec le support 31 par une bride.

Ce porte satellites 27 qui est fixe en rotation autour de l'axe longitudinal AX du moteur, entoure un planétaire intérieur non représenté et faisant partie d'un rotor basse pression non visible, et il est entouré par un satellite extérieur non représenté solidarisé à une soufflante du moteur. Chaque satellite 29 est engrené avec le planétaire intérieur et avec le planétaire extérieur non représentés, l'intérieur et l'extérieur étant définis par rapport à l'axe longitudinal AX, le planétaire intérieur ayant un diamètre inférieur au planétaire extérieur et étant de ce fait le plus proche de l'axe AX.

Comme dans le cas de la figure 2, le rotor basse pression entraîne ainsi en rotation la soufflante par l'intermédiaire des pignons satellites 29 qui tournent autour d'axes fixes, la soufflante tournant ainsi moins vite que le rotor basse pression et en sens inverse.

Le support 31 est dimensionné pour avoir une certaine souplesse de manière à compenser les défauts de coaxialité du corps 28 et des planétaires intérieurs et extérieur. Il possède de ce fait également une certaine souplesse en torsion autour de l'axe AX. Comme visible sur les figures 3 à 6, ce support 31 a ici une forme générale de soufflet, comportant des ondulations de type rectangulaires lorsque vu en coupe.

L'ensemble du porte satellites est bloqué en rotation au moyen d'une liaison amont L1 de type crabot située au niveau du corps 28, et d'une liaison aval L2, également de type crabot située en partie aval du support 31. Ces deux liaisons crabot sont dimensionnées avec un jeu circonférentiel significatif leur permettant de coopérer pour répartir la transmission du couple exercé par le porte satellites sur le carter 32 qui l'entoure.

Le corps 28 est pourvu de dents externes amont 33 qui sont engagées entre des dents internes amont 34 du carter 32, l'emboîtement des dents amont 33 avec les dents amont 34 constitue une liaison de type crabot, mais il est prévu avec un jeu significatif selon les directions circonférentielle et radiale à l'arrêt et en fonctionnement normal.

Comme visible plus en détail sur l'exemple de la figure 4, chaque dent externe amont 33, a une forme générale relativement simple s'apparentant à celle d'un parallélogramme, délimitée par une face amont 36, une face aval, une face radialement externe 37, une face latérale d'appui 38 et une face latérale secondaire 39. Les faces amont et aval sont normales à l'axe AX, alors que la face d'appui et la face secondaire s'étendent selon des plans passant par l'axe AX ou à faible distance celui-ci.

De façon analogue, dans l'exemple des figures, chaque dent interne amont 34 a aussi une forme parallélépipédique délimitée par une face amont 41, une face aval, une face radialement interne, une face latérale d'appui 42 et une face latérale secondaire 43. Chaque dent externe amont 33 porte un ressort hélicoïdal 44 qui dépasse de sa face d'appui 38 en étant orienté vers, et en appui sur, la face d'appui 42 de la dent amont interne 34 qui est intercalée entre ces deux dents amont externes 33 consécutives. L'extrémité aval du support 31 est pourvue de dents externes aval 46 qui sont engagées entre des dents internes aval 47 du carter 32, formant la liaison crabot aval T2 présentant elle aussi un jeu circonférentiel significatif.

Chaque dent externe aval 46, a dans l'exemple des figures une forme s'apparentant à un parallélogramme, délimitée par une face amont, une face aval, une face radialement externe, une face latérale d'appui 48 et une face latérale secondaire 49, ayant les mêmes orientations que les faces de dents externes amont. Chaque dent interne aval 47 a dans l'exemple des figures aussi une forme parallélépipédique délimitée par une face amont, une face aval, une face radialement interne, une face latérale d'appui 51 et une face latérale secondaire 52 ayant les mêmes orientations que les faces des dents internes amont.

Les ressorts 44 pressent les faces latérales d'appui 38 et 42 des dents externes et internes amont pour les écarter les unes des autres, en tendant à faire tourner le porte satellites 27 par rapport au carter 32 dans le sens direct sur les figures, le planétaire extérieur qui est lié en rotation à la soufflante du moteur tournant quant à lui dans le sens indirect. Ainsi, à l'état de repos comme sur la figure 4, les ressorts 44 tendent à faire tourner le porte satellites jusqu'à ce que les dents aval internes et externes viennent en appui les unes sur les autres au niveau de leurs faces latérales secondaires 49 et 52.

Dans cette situation, le corps 28 et l'extrémité aval du support 31 sont considérés comme étant à leurs positions de références respectives autour de l'axe AX. Cette position de référence correspond à un état de précontrainte du support 31, c'est-à-dire dans lequel ce support est déformé en torsion dans le sens direct entre les liaisons L1 et L2, ce sens direct étant opposé à son sens de déformation lorsqu'il est en service.

Lors du montage de l'ensemble, les ressorts 44 sont comprimés et le support 31 est mis en prétorsion, cette opération étant avantageusement réalisée avec un outillage spécifique retiré après montage. Le jeu au niveau des dents aval est avantageusement minimal, pour faciliter le montage et limiter l'amplitude de mouvement du porte-satellites.

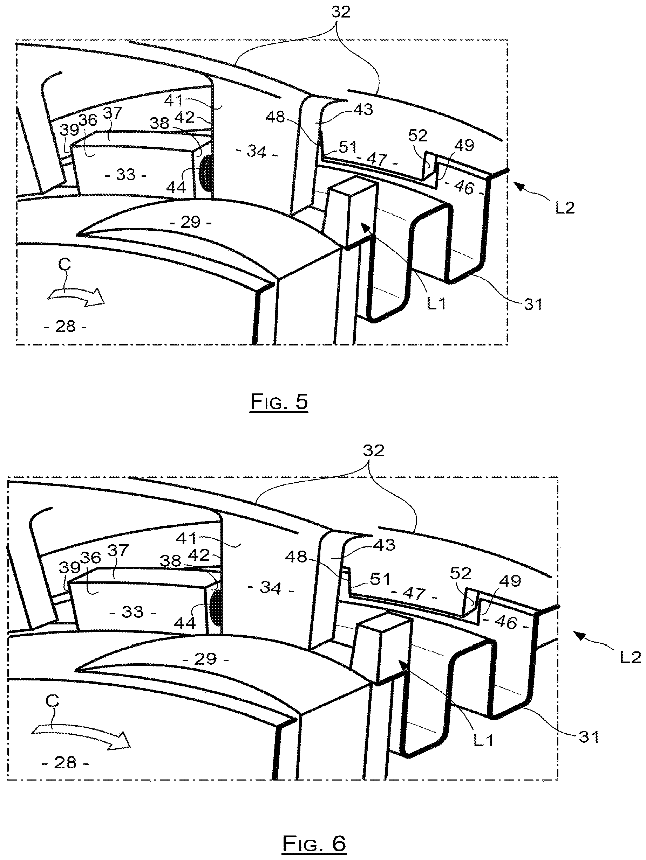

Lorsque le moteur est en conditions normales de service comme sur la figure 5, le corps 28 est soumis à un couple C nominal résultant des efforts exercés sur les dentures des satellites 29, qui tend à le faire tourner dans le sens indirect, à l'encontre des ressorts 44. Dans ces conditions, les ressorts 44 se compriment jusqu'à ce que les dents aval internes et externes 46 et 47 viennent au contact les unes des autres par leurs faces d'appui respectives 48 et 51, et les ressorts 44 sont compressés entre les faces d'appui 38 et 42 qu'ils tendent à écarter.

L'ensemble est dimensionné pour que dans cette situation, le support flexible 31 subit une déformation de torsion élastique sensible autour de l'axe AX entre les liaisons L1 et L2, son corps 28 tournant d'une faible valeur dans le sens indirect par rapport à sa portion aval. Ainsi, une partie du couple C est transmise au carter 32 par les dents amont via les ressorts 44, la partie complémentaire de ce couple étant transmise au carter par les dents aval en appui les unes contre les autres.

Autrement dit lorsque le couple C a une valeur nominale, la compression des ressorts 44 est trop faible pour contrer le couple entièrement : ils sont comprimés jusqu'à venir mettre en contact les dents aval internes et externes.

Avantageusement, cette mise en contact intervient en phase de régime transitoire du moteur, pour assurer qu'en régime stabilisé, il ne soit pas soumis à une alternance de mises en contact et d'espacement des dents aval susceptible de générer des vibrations sous l'effet de variations de couple périodiques.

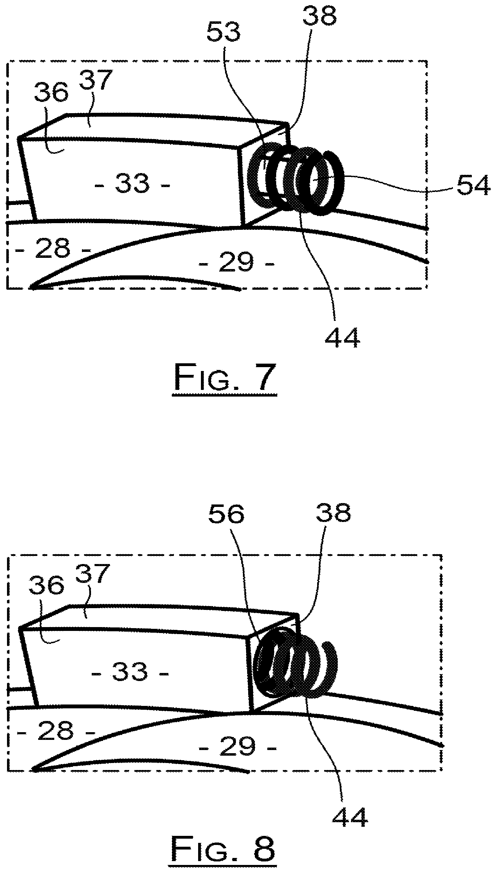

En ce qui concerne les ressorts 44, ils sont dimensionnés avantageusement pour transférer de l'ordre de la moitié du couple C en fonctionnement normal, ce dimensionnement étant conditionné par le nombre de ressorts et par leur raideur. Lorsque le couple C devient supérieur à une valeur nominale prédéterminée, comme dans la figure 6, les ressorts 44 sont totalement comprimés, et le support 31 subit une déformation de torsion maximale autour de l'axe AX dans le sens indirect entre ses liaison L1 et L2. Dans la situation extrême correspondant à la figure 6, les ressorts 44 subissent une compression maximale : chaque dent externe 33 comporte un axe 53 dépassant perpendiculairement de sa face d'appui 38 entouré par le ressort 44, et dont l'extrémité est une touche de contact 54 en appui direct sur la face latérale 42 de la dent interne 34 suivante. Cet agencement apparaît plus en détails sur la figure 7, où l'axe est repéré par 53 et sa touche d'appui par 54.

Dans cette situation, le support 31 subit une déformation élastique en torsion autour de l'axe AX entre les liaisons L1 et L2 qui est maximale vis-à-vis du dimensionnement. Le couple supplémentaire par rapport au couple nominal est alors transmis au carter 32 par les dents amont internes et externes qui sont alors en appui direct les unes sur les autres. Dans l'exemple de la figure 7, le ressort 44 entoure un axe 53 dépassant de la face d'appui 38, et dont l'extrémité constitue la touche 54 d'appui direct de la dent externe 33 sur la face d'appui 42 de la dent interne 34 suivante. D'autres agencements sont possibles comme dans l'exemple de la figure 8, où la dent 33 comporte un trou borgne 56 qui traverse sa face d'appui 38 et dans lequel est logé le ressort 44 qui dépasse significativement de ce trou à l'état de repos. Lorsque le couple transmis est supérieur à la valeur nominale, la dent 33 vient alors en appui directement par sa face d'appui 38 sur la face d'appui 42 de la dent interne 34 suivante, le ressort 44 étant alors intégralement comprimé dans le trou borgne 56.

Dans le cas de la figure 7, il existe un jeu entre l'axe 53 et le ressort 44 qui l'entoure, de façon à permettre au ressort de tolérer des déplacements axiaux et radiaux du corps 28 par rapport au carter 32 solidaire de la structure. Autrement dit, le diamètre interne du ressort 44 est supérieur au diamètre externe de l'axe 53. De façon analogue, dans le cas de la figure 8, un jeu est prévu entre le trou 56 et le ressort 44 reçu dans ce trou : le diamètre interne du trou 56 est supérieur au diamètre externe du ressort 44.

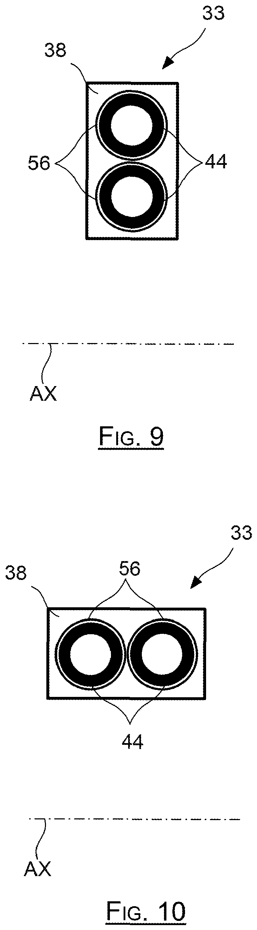

Dans un cas comme dans l'autre, le ressort 44 est un ressort hélicoïdal qui équipe la dent qui le porte, mais il est également possible de prévoir que chaque dent porte deux ressorts ou trois, selon toute disposition appropriée, en fonction de la forme et de l'étendue de la face d'appui 38. A cet effet, on a représenté sur la figure 9 un agencement dans lequel une dent porte deux ressorts 44 à sa face d'appui 38 qui sont espacés l'un de l'autre radialement par rapport à l'axe AX. Dans une autre configuration correspondant à la figure 10, la dent porte deux ressorts 44 disposés côte à côte longitudinalement, à sa face d'appui 38, c'est-à-dire espacés l'un de l'autre le long de l'axe AX.

D'une manière générale, la première liaison L1 assure le transfert de couple au delà du couple nominale de service, un tel couple étant encore appelé couple ultime. Cette première liaison L1 constitue un limiteur de la déformation en torsion du support flexible 31, et par là même un limiteur de la contrainte mécanique de torsion subie par ce support 31.

Dans les exemples des figures, ce sont des ressorts 44 qui assurent la précontrainte en torsion du porte satellite 27, mais d'autres moyens peuvent également être envisagés, comme par exemple un système hydraulique ou pneumatique passif ou actif ou encore un système de type magnétique.

## Revendications

1. Ensemble de réduction (26) comportant un planétaire intérieur mobile et un planétaire extérieur mobile ainsi qu'un porte satellites (27) souple et fixe portant des pignons satellites (29) engrenés avec le planétaire intérieur qu'ils entourent et avec le planétaire extérieur qui les entoure, **caractérisé en ce que** ce porte satellites (27) est lié à un carter (32) qui l'entoure par au moins deux liaisons (L1, L2) distinctes, avec des moyen (44) de précontrainte en torsion le porte satellites (27) entre ces deux liaisons (L1, L2).

2. Ensemble de réduction selon la revendication 1, dans lequel l'une des deux liaisons (L1) du porte satellites (27) avec le carter (32) est une liaison de type crabot, comportant des dents externes (33) portées par le porte satellites (27) et des dents internes (34) portées par le carter (32), dans lequel les moyens de précontraintes sont portés par des dents.

3. Ensemble de réduction selon la revendication 2, dans lequel les moyens de précontrainte sont des ressorts hélicoïdaux (44), chaque ressort (44) étant porté par une dent (33) en étant orienté circonférentiellement et interposé entre une dent externe (33) et une dent interne (34) qui lui est consécutive.

4. Ensemble de réduction selon la revendication 3, dans lequel au moins un ressort (44) est porté par une dent (33) pourvue d'une face d'appui (38, 54) par laquelle elle vient en appui sur la dent (34) qui lui est consécutive en cas de compression maximale du ressort (44).

5. Ensemble de réduction selon la revendication 3 ou 4, dans lequel au moins un ressort (44) entoure un axe (53) dépassant d'une dent, cet axe (53) étant terminé par une face d'appui (54).

6. Ensemble de réduction selon la revendication 3 ou 4, dans lequel au moins un ressort (44) est engagé dans un trou (56) formé dans la dent (33) qui le porte.

7. Ensemble de réduction selon l'une des revendications précédentes, dans lequel l'autre liaison (L2) du porte satellites (27) avec le carter (32) est également une liaison de type crabot.

8. Ensemble de réduction selon l'une des revendications 3 à 7, comportant des dents (33) pourvues de plusieurs ressorts (44).

9. Ensemble de réduction selon la revendication 8, comportant au moins une dent (33) pourvue de deux ressorts (44) espacés radialement ou longitudinalement à une face de cette dent (33).

10. Turbomachine comprenant un ensemble de réduction selon l'une des revendications précédentes.

11. Turboréacteur comprenant un ensemble de réduction selon l'une des revendications 1 à 9.

## Patentansprüche

1. Untersetzungsanordnung (26), die ein bewegliches inneres Planetenrad und ein bewegliches äußeres Planetenrad sowie einen elastischen und festen Satellitenträger (27) umfasst, der Satellitenritzel (29) trägt, die mit dem inneren Planetenrad, das sie umgeben, und mit dem äußeren Planetenrad, das sie umgibt, kämmen, **dadurch gekennzeichnet, dass** dieser Satellitenträger (27) über mindestens zwei separate Verbindungen (L1, L2) mit Mitteln (44) zum Vorspannen des Satellitenträgers (27) auf Torsion zwischen diesen zwei Verbindungen (L1, L2) mit einem Gehäuse (32), das ihn umgibt, verbunden ist.

2. Untersetzungsanordnung nach Anspruch 1, wobei eine der zwei Verbindungen (L1) des Satellitenträgers (27) mit dem Gehäuse (32) eine Verbindung vom Klauentyp ist, die äußere Zähne (33), die vom Satellitenträger (27) getragen werden, und innere Zähne (34) umfasst, die vom Gehäuse (32) getragen werden, wobei die Vorspannmittel von den Zähnen getragen werden.

3. Untersetzungsanordnung nach Anspruch 2, wobei die Vorspannmittel Schraubenfedern (44) sind, wobei jede Feder (44) von einem Zahn (33) getragen wird, wobei sie in Umfangsrichtung ausgerichtet und zwischen einem äußeren Zahn (33) und einem ihm nachfolgenden inneren Zahn (34) eingefügt ist.

4. Untersetzungsanordnung nach Anspruch 3, wobei mindestens eine Feder (44) von einem Zahn (33) getragen wird, der mit einer Auflagefläche (38, 54) versehen ist, über die er im Falle maximaler Kompression der Feder (44) an dem ihm nachfolgenden Zahn (34) in Auflage kommt.

5. Untersetzungsanordnung nach Anspruch 3 oder 4, wobei mindestens eine Feder (44) eine Achse (53) umgibt, die von einem Zahn vorsteht, wobei diese Achse (53) mit einer Auflagefläche (54) endet.

6. Untersetzungsanordnung nach Anspruch 3 oder 4, wobei mindestens eine Feder (44) in ein Loch (56) eingerückt ist, das in dem Zahn (33), der sie trägt, gebildet ist.

7. Untersetzungsanordnung nach einem der vorstehenden Ansprüche, wobei die andere Verbindung (L2) des Satellitenträgers (27) mit dem Gehäuse (32) ebenfalls eine Verbindung vom Klauentyp ist.

8. Untersetzungsanordnung nach einem der Ansprüche 3 bis 7, die Zähne (33) umfasst, die mit mehreren Federn (44) versehen sind.

9. Untersetzungsanordnung nach Anspruch 8, die mindestens einen Zahn (33) umfasst, der mit zwei Federn (44) versehen ist, die radial oder in Längsrichtung von einer Fläche dieses Zahns (33) beabstandet sind.

10. Turbotriebwerk, das eine Untersetzungsanordnung nach einem der vorstehenden Ansprüche umfasst.

11. Turbostrahltriebwerk, das eine Untersetzungsanordnung nach einem der Ansprüche 1 bis 9 umfasst.

## Claims

1. Reducing gearset (26) comprising a mobile sun gear and a mobile ring gear and a flexible and fixed planet carrier (27) carrying planet gears (29) that are engaged with the sun gear that they surround and with the ring gear that surrounds them, **characterized in that** this planet carrier (27) is connected to a case (32) that surrounds it by at least two separate connections (L1 L2), with means (44) to pretension the planet carrier (27) between these two connections (L1 L2) in torsion.

2. Reducing gearset according to claim 1, wherein one of the two connections (L1) between the planet carrier (27) and the case (32) is a dog-type connection, comprising external teeth (33) carried by the planet carrier (27) and internal teeth (34) carried by the case (32), and in which the prestress means are carried by teeth.

3. Reducing gearset according to claim 2, wherein the prestress means are coil springs (44), each spring (44) being circumferentially oriented and carried by a tooth (33), and interposed between an external tooth (33) and an internal tooth (34) that is consecutive to it.

4. Reducing gearset according to claim 3, wherein each spring (44) is carried by a tooth (33) provided with a bearing face (38, 54) through which it bears on the tooth (34) that is consecutive to it if the spring (44) is fully compressed.

5. Reducing gearset according to any of the claims 3 or 4, wherein at least on spring (44) surrounds a pin (53) projecting from a tooth, this pin (53) terminating at a bearing face (54).

6. Reducing gearset according to any of the claims 3 or 4, wherein at least one spring (44) is engaged in a hole (56) formed in the tooth (33) that carries it.

7. Reducing gearset according to any of the preceding claims, wherein the other connection (L2) between the planet carrier (27) and the case (32) is also a dog-type connection.

8. Reducing gearset according to any of the claims 3 to 7, comprising teeth (33) provided with several springs (44).

9. Reducing gearset according to claim 8, comprising at least one tooth (33) provided with two springs (44) separated radially or longitudinally on one face of this tooth (33).

10. Turbomachine comprising a reducing gearset according to any of the preceding claims.

11. Turbojet comprising a reducing gearset according to any of the claims 1 to 9.
